(19) Europäisches Patentamt
European Patent Office
Office européen des brevets

(11) EP 4 015 584 B1

(12) EUROPÄISCHE PATENTSCHRIFT

(45) Veröffentlichungstag und Bekanntmachung des Hinweises auf die Patenterteilung:
**30.08.2023 Patentblatt 2023/35**

(21) Anmeldenummer: **21213075.1**

(22) Anmeldetag: **08.12.2021**

(51) Internationale Patentklassifikation (IPC):
***C09D 5/00*** *(2006.01)* ***C09D 7/45*** *(2018.01)*
***C09D 7/63*** *(2018.01)* ***C09K 23/56*** *(2022.01)*
***C08K 5/1545*** *(2006.01)* *C09D 5/02 (2006.01)*
*C09D 7/61 (2018.01)* *C08K 3/00 (2018.01)*
*C09D 123/08 (2006.01)* *C09D 131/04 (2006.01)*

(52) Gemeinsame Patentklassifikation (CPC):
(C-Sets verfügbar)
**C09D 5/027; C09D 5/022; C09D 5/025; C09D 5/028; C09D 7/45; C09D 7/61; C09D 7/63; C09D 131/04;** C08K 3/013; C08K 5/1545 (Forts.)

(54) **VERWENDUNG VON RHAMNOLIPIDEN UND/ODER SOPHOROLIPIDEN ZUR ERHÖHUNG DER ERGIEBIGKEIT UND/ODER ZUR ERHALTUNG DER APPLIKATIONSEIGENSCHAFTEN BEI LAGERUNG VON BESCHICHTUNGSZUSAMMENSETZUNGEN**

USE OF RHAMNOLIPIDS AND / OR SOPHOROLIPIDS FOR INCREASING THE YIELD AND / OR FOR MAINTAINING THE APPLICATION PROPERTIES OF COATING COMPOSITIONS

UTILISATION DE RHAMNOLIPIDES ET/OU DE SOPHOROLIPIDES POUR AUGMENTER LE RENDEMENT ET/OU POUR MAINTENIR LES PROPRIÉTÉS D’APPLICATION LORS DU STOCKAGE DES COMPOSITIONS DE REVÊTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2020 EP 20214082**

(43) Veröffentlichungstag der Anmeldung:
**22.06.2022 Patentblatt 2022/25**

(73) Patentinhaber: **Evonik Operations GmbH**
**45128 Essen (DE)**

(72) Erfinder:
- **Reuter, Ellen**
  **44799 Bochum (DE)**
- **Silber, Stefan**
  **47804 Krefeld (DE)**
- **Allef, Petra**
  **45128 Essen (DE)**
- **Roland, Katrin**
  **45257 Essen (DE)**
- **Cavaleiro, Pedro**
  **50858 Köln (DE)**
- **Mergenthaler, Jochen**
  **45219 Essen (DE)**
- **Jansen, Claudia**
  **51371 Leverkusen (DE)**
- **Blei, Marco**
  **45138 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 3 006 505** **EP-A1- 3 385 338**
**DE-A1- 19 743 841**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C09D 131/04, C08K 5/1545**

## Beschreibung

Die Erfindung betrifft die Verwendung von Rhamnolipiden und/oder Sophorolipiden zur Erhöhung der Ergiebigkeit und/oder zur Erhaltung der Applikationseigenschaften bei Lagerung von Beschichtungszusammensetzungen.

Für viele Beschichtungsaufgaben werden Formulierungen eingesetzt, die Partikel wie farbgebende Pigmente oder Füllstoffe enthalten.

Für Lackanwender stellt die theoretische Ergiebigkeit von Beschichtungszusammensetzungen eine wichtige Anwendungseigenschaft dar. Für Objekte, die mit einer Beschichtung versehen werden, gibt die theoretische Ergiebigkeit an, wieviel $m^2$ Oberfläche mit einem Kilogramm oder Liter der Beschichtungszusammensetzung beschichtet werden können. Für die Berechnung wird eine Schichtdicke herangezogen, mit der sich unter Normbedingungen ein Lackfilm mit dem gewünschten Deckvermögen erreichen lässt. Die theoretische Ergiebigkeit stellt einen berechneten Grenzwert dar, der in der Praxis annähernd erreicht werden kann. Bei der praktischen Ergiebigkeit müssen zusätzliche Faktoren wie Stoffverluste berücksichtigt werden, die je nach Lackierverfahren, z.B. Spritzen oder Rollen, und Untergrund, z.B. rau, glatt oder saugend, verschieden sind.

Die Ergiebigkeit gib an, welche Lackmenge für eine deckend zu beschichtende Fläche erforderlich ist. Daher ist die Ergiebigkeit nicht nur vor dem Hintergrund technischer Aspekte wie möglichst guter Abdeckung der Untergründe, sondern auch unter wirtschaftlichen Gesichtspunkten eine wichtige Information. Die ermittelte theoretische Ergiebigkeit ermöglicht eine Vergleichbarkeit des Materialbedarfs für eine zu beschichtende Fläche und der damit verbundenen Beschichtungskosten für den Anwender.

Zur Ermittlung der Ergiebigkeit wird hier auf die "Richtlinie zur Bestimmung des Deckvermögens, Ausgabe Juli 2002, Verband der deutschen Lackindustrie e.V." verwiesen.

Danach ist das Deckvermögen einer Beschichtung eines der auschlaggebenden Qualitätskriterien, dessen Grundlage das Kontrastverhältnis einer gemäß Richtlinie und Prüfnorm auf einen Prüfuntergrund aufgebrachten Beschichtung ist. Für das Kontrastverhältnis werden in der DIN EN 13300 vier Klassen angegeben:

Klasse 1: ≥ 99,5 %
Klasse 2: ≥ 98 % und < 99,5 %
Klasse 3: ≥ 95 % und < 98 %
Klasse 4: < 95 %

Die Klassen werden zusammen mit der Ergiebigkeit in ganzen oder halben Zahlen von $m^2$/l angegeben. Beispiel: Klasse 1 bei 8 $m^2$/l, oder Klasse 2 bei 9,5 $m^2$/l.

Für ein gutes Deckvermögen sorgen bekanntermaßen zunächst der Festkörpergehalt (u. a. bestimmt durch den Anteil der Pigmente und Füllstoffe sowie Bindemittel in der Formulierung) und die Dichte der Beschichtungszusammensetzung. Dies ist von Bedeutung, da bei einem Lack mit einem hohen Festkörpergehalt weniger aufgetragen werden muss, als bei einem Lack mit niedrigeren Festkörpergehalt, um eine angestrebte Schichtdicke des getrockneten Lackfilms zu erreichen.

Um Pigmente und/oder Füllstoffe in flüssigen Medien einzuarbeiten und die notwendige Größenverteilung der Partikel herzustellen, sind hohe mechanische Kräfte notwendig. Jedoch neigen die Pigmente und Füllstoffe nach dem Dispergierprozess wieder zur Reagglomeration oder Flokkulation, was das Dispergierergebnis zunichtemacht und zu gravierenden anwendungstechnischen Problemen wie z. B. mangelnder Farbintensität, mangelndem Deckvermögen & Kontrastverhältnis; Glanzverlust, Viskositätsveränderung bei Lagerung oder Absetzproblemen im Nasslack führt.

Für die zuverlässige Dispergierung und Stabilisierung von Pigmenten in Beschichtungssystemen verwendet man im Allgemeinen Netz- und Dispergieradditive. Die Netz- und Dispergieradditive benetzen und belegen als grenzflächenaktive Substanzen die Oberfläche der zu dispergierenden Partikel, bewirken eine Verringerung der Viskosität der zu dispergierenden Mischungen und stabilisieren diese gegen eine unerwünschte Partikel-Reagglomeration oder Flokkulation.

Aus dem Stand der Technik sind z.B. polymere Netz- und Dispergiermittel bekannt, die zum einen pigmentaffine Gruppen wie Carboxyl-, Amino- oder Phenylfunktionalitäten und zum anderen im Medium lösliche Seitenketten enthalten. Die pigmentaffinen Gruppen sollen dabei idealerweise eine schnelle Orientierung an die Oberfläche der Pigmente sowie eine hohe Permanenz auf ihr besitzen. Die Seitenketten sorgen für die Kompatibilität mit dem Dispergier- bzw Lackmedium und für eine sterische Stabilisierung der dispergierten Phase.

Die EP 1 486 524 A1 beschreibt die Herstellung von Epoxid Amin-Addukten und deren Salzen zur Verwendung als Dispergiermittel. Diese sind erhältlich durch die Umsetzung mono- oder polyfunktioneller, aromatischer Epoxide mit Polyoxyalkylenmonoaminen..

Die EP 1 745 104 A1 offenbart kammartige Polyetheralkanolamine als Dispergiermittel für Tinten und Druckfarben.

In der WO 2016/059066 werden Kamm-Copolymere auf der Basis von Epoxy Amin- Addukten beschrieben.

Ebenso wichtig für die Erzielung der gewünschten Applikationseigenschaften ist das rheologische Verhalten der Beschichtungszusammensetzung. Daher ist das Einstellen eines Rheologieprofils der Beschichtungszusammensetzung besonders wichtig. Dieses Rheologieprofil wird durch das anzuwendende Auftragsverfahren (z. B. Spritzen, Rollen, Walzen, Gießen, Streichen oder Druckverfahren) vorgegeben und durch die Wahl der Formulierung sichergestellt.

In der Regel wird das Rheologieprofil über einen breiten Bereich der Scherrate gemessen. Es ist bekannt, dass eine hohe Scherrate z. B. die Spritzneigung oder Streichbremse, Spritznebelbildung und eine niedrige Scherrate z. B. das Ablaufverhalten sowie den Lackverlauf widerspiegeln.

Jedoch verändert sich das zuvor eingestellte Rheologieprofil häufig während der Lagerung, so dass die Beschichtungszusammensetzung für ein bestimmtes Auftragsverfahren nicht mehr geeignet ist.

In einigen Veröffentlichungen werden auch Biotenside, oder auch Bio-Surfactants genannt, als Dispergiermittel, als Entschäumer, als Netzmittel oder als Emulgator in Farben und Lacken erwähnt. Bekannte Vertreter dieser Bio-Surfactants sind Rhamnolipide und Sophorolipide. Diese Lipide werden heutzutage mit Wildtyp-Isolaten verschiedener Hefen, insbesondere mit Candida bombicola, hergestellt.

Die EP 3 006 505 beschreibt zum Beispiel eine Beschichtungszusammensetzung, die eine Dispersion bestehend aus einem Bindemittel, einem Biozid und einem Biotensid bestehend aus Rhamnolipiden und Sophorolipiden, enthält. Die EP 2 847 285 offenbart eine ähnliche Zusammensetzung, wobei das Isothiazolinon-Biozid konkret zugesetzt wird. Beide Schriften offenbaren die synergistische Biozid-Wirkung der Rhamnolipide und Sophorolipide mit einem Biozid.

Es wäre wünschenswert, Substanzen zu identifizieren, die die Ergiebigkeit einer Beschichtungszusammensetzung erhöhen, ohne den Füllgrad oder den nichtflüchtigen Anteil der Beschichtungszusammensetzung zu verändern. Auch wäre es wünschenswert, wenn die Applikationseigenschaften der Beschichtungszusammensetzung nach Lagerung möglichst erhalten bleiben.

Applikation und Auftragsverfahren sind als Synonyme zu verwenden.

Überraschenderweise wurde nun gefunden, dass die Verwendung von Rhamnolipiden und/oder Sophorolipiden zur Erhöhung der Ergiebigkeit von Beschichtungszusammensetzungen geeignet ist, ohne die Menge an Pigmenten oder Füllstoffen sowie sonstigen nichtflüchtigen Anteilen zu verändern. Auch völlig überraschend konnte festgestellt werden, dass durch die erfindungsgemäße Verwendung von Rhamnolipiden und/oder Sophorolipiden das Rheologieprofil nach Lagerung weniger Abweichungen zum gewünschten und eingestellten Rheologieprofil aufweist als das einer vergleichbaren handelsüblichen Beschichtungszusammensetzung. Somit bleibt eine Einsetzbarkeit der erfindungsgemäße Beschichtungszusammensetzung für die gewünschte Applikation erhalten.

Diese Abweichung des Rheologieprofils wird durch die Messung der Viskosität einer Beschichtungszusammensetzung bei bestimmten Scherraten vor und nach Lagerung quantifiziert. In der Lackindustrie werden üblicherweise die Viskositätswerte vor (z. B. einen Tag nach Herstellung der Beschichtungszusammensetzung) und nach Lagerung (z.B. eine Woche nach Herstellung der Beschichtungszusammensetzung) bei den Scherraten 1/sec, 100/sec und 1000/sec herangezogen, um eine Aussage über die Applikationseigenschaften der Beschichtungszusammensetzung zu treffen. Je größer der Zahlenwert des festgestellten Viskositätsverhältnisses ist, desto stärker ist auch die Abweichung vom gewünschten und eingestellten Rheologieprofil.

Vorzugsweise handelt es sich bei den Beschichtungszusammensetzungen um Zubereitungen für verschiedene Anwendungsbereiche, die durch Auftragsverfahren wie z. B. Spritz-, Tauch, Walz-, Gieß-, Rollen- oder Streichapplikation sowie verschiedene Druckverfahren auf den zu beschichtenden Untergrund aufgebracht werden.

Beispiele für Beschichtungsstoffe im Sinne der vorliegenden Erfindung sind Farben, Lacke, Druckfarben und sonstige Beschichtungsstoffe, wie lösemittelhaltige oder wässrige Lacke und lösemittelfreie Lacke, Pulverlacke, UV-härtbare Lacke, Low-Solids, Medium-Solids, High-Solids, Automobillacke, Holzlacke, Einbrennlacke, 2K-Lacke, Metallbeschichtungsstoffe, Tonerzusammensetzungen. Weitere Beispiele für Beschichtungsstoffe werden in "Bodo Müller, Ulrich Poth, Lackformulierung und Lackrezeptur, Lehrbuch für Ausbildung und Praxis, Vincentz Verlag, Hannover (2003)" und "P.G. Garrat, Strahlenhärtung, Vincent Verlag "Hannover (1996)" genannt.

Beschichtungsstoffe und Beschichtungszusammensetzungen werden als Synonyme verwendet.

Bevorzugt handelt es sich bei den Farben und Lacken um Innenwandfarben, Fassadenfarben, Bautenfarben, Fussbodenbeschichtungen, Holzlacke, Industrielacke, Lacke für Automotive OEM (Original Equipment Manufacturer) oder Refinish, Grundierungen, Füller, Basislacke sowie Decklacke.

Beispiele für Druckfarben und/oder Drucklacke im Sinne der vorliegenden Erfindung sind lösemittelbasierende oder wässrige Druckfarben, Flexodruckfarben, Tiefdruckfarben, Buchdruck- bzw. Hochdruckfarben, Offsetdruckfarben, Lithographie-Druckfarben, Druckfarben für den Verpackungsdruck, Siebdruckfarben, Drucktinten, wie Drucktinten für Tintenstrahldrucker, Ink Jet Tinte, Drucklacke, wie Überdrucklacke. Weitere Druckfarbenund/oder Drucklackformulierungen sind in "E.W. Flick, Printing Ink and Overprint Varnish Formulations - Recent Developments, Noyes Publications, Park Ridge NJ, (1990)" und nachfolgende Auflagen genannt.

Bevorzugt weisen die Beschichtungszusammensetzungen Feststoffe auf ausgewählt aus den Gruppen der Füllstoffe, Pigmente, Farbstoffe, optischen Aufheller, keramischen Materialien, magnetischen Materialien auf.

Beispiele für Pigmente sind solche aus der Gruppe der anorganischen Pigmente, wie Ruße, Titandioxide,

Zinkoxide, Preußischblau, Eisenoxide, Cadmiumsulfide, Chrompigmente, wie zum Beispiel Chromate, Molybdate und gemischte Chromate und Sulfate des Bleis, Zink, Barium, Calcium und deren Mischungen. Weitere Beispiele für anorganische Pigmente werden in dem Buch "H. Endriss, Aktuelle anorganische Bunt-Pigmente, Vincentz Verlag, Hannover (1997)" genannt.

Beispiele für organische Pigmente sind solche aus der Gruppe der Azo-, Diazo-, kondensierten Azo-, Naphtol-, Metallkomplex-, Thioindigo-, Indanthron-, Isoindanthron-, Anthanthron-, Anthrachinon-, Isodibenzanthron-, Triphendioxazin-, Chinacridon-, Perylen-, Diketopyrrolopyrrol und Phtalocyaninpigmente. Weitere Beispiele für organische Pigmente werden in dem Buch "W. Herbst, K.Hunger, Industrial Organic Pigments, VCH, Weinheim (1993)" genannt.

Beispiele für Füllstoffe sind solche aus den Gruppen Talk, Kaolin, Kieselsäuren, Baryte und Kalk; keramische Materialien, wie zum Beispiel Aluminiumoxide, Silikate, Zirkonoxide, Titanoxide, Bornitride, Siliziumnitride, Borcarbide, gemischte Silizium-Aluminiumnitride und Metall-Titanate; magnetische Materialien, wie zum Beispiel magnetische Oxide von Übergangsmetallen, wie Eisenoxide, Kobalt dotierte Eisenoxide und Ferrite; Metalle, wie zum Beispiel Eisen, Nickel, Kobalt und deren Legierungen.

Dem Fachmann ist bekannt, dass in derartigen Beschichtungszusammensetzungen weitere Inhaltsstoffe enthalten können. Als flüssiges Medium können sie organische Lösemittel (z. B. Acetate wie Butyl- oder Ethylacetat, Kohlenwasserstoffe wie Testbenzine verschiedener Siedebereiche, Alkohole, Ether, Glykole und Glycolether) und/oder Wasser enthalten, wie dies in Abhängigkeit von den verwendeten Bindemitteln als Stand der Technik bekannt ist.

Es können übliche Bindemittel eingesetzt werden. Vorzugsweise können Alkyd-, Acrylat-, Styrolacrylat-, Epoxy-, Polyvinylacetat-, Polyester- oder Polyurethanbindemitteln verwendet werden. Dabei ist jede Art der Aushärtung möglich, beispielsweise oxidativ trocknend, physikalisch trocknend, selbstvernetzend; UV- oder Elektronenstrahl-härtend oder vernetzend durch Einbrennen.

Es ist vorstellbar, dass die Beschichtungszusammensetzung weitere Zusatzstoffe enthalten, wie zum Beispiel bevorzugt Netzmittel, Dispergieradditive, Rheologieadditive, Verlaufshilfsmittel oder Entschäumer.

Rhamnolipide und Sophorolipide sind Tenside, die mittels Fermentation hergestellt werden können.

Rhamnolipide setzen sich aus ein bis zwei Rhamnose-Einheiten und ein bis drei, meist β-Hydroxy-Fettsäuren zusammen. Die Fettsäuren können gesättigt oder ungesättigt sein.

Die Variation in der Kettenlänge und Menge (Kongener) der Fettsäureanteile ist in einigen Veröffentlichungen beschrieben (Howe et al., FEBS J. 2006; 273(22):5101-12; Abdel-Mawgoud et al., Appl Microbiol Biotechnol, 86, 2010; S. 1323-1336).

Miao et al., Journal of Surfactants and Detergents, 17 (6), 2014; 1069-1080, beschreibt die Synthese von di-Rhamnolipidethylestern durch die Veresterung mit Ethanol sowie die Eignung der Ester als nichtionisches Tensid.

WO 2001 010447 und EP1 889 623 offenbaren die pharmazeutischen und kosmetischen Anwendungen von Rhamnolipiden und kurzkettigen Rhamnolipidestern (C1-C6; Methyl- bis Hexylester, linear oder verzweigt), insbesondere bei der Wundheilung.

Bevorzugt handelt es sich bei den Rhamnolipiden um Verbindungen gemäß der allgemeinen Formel (I) oder deren Salze

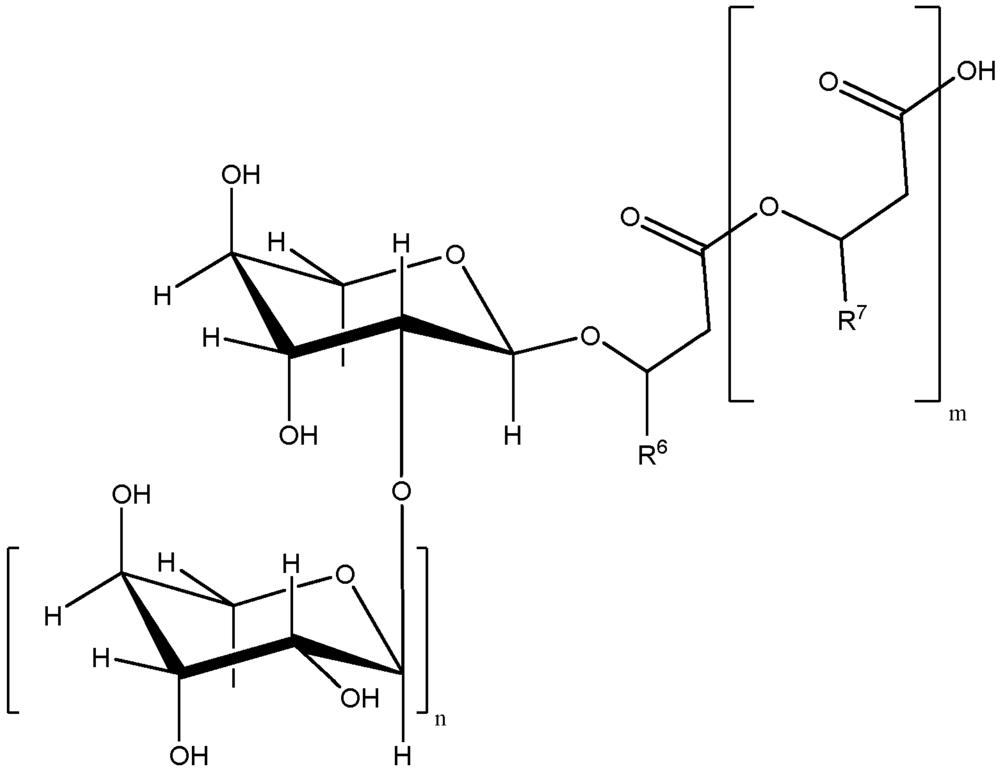

Formel (I)

wobei

m = 2, 1 oder 0, insbesondere 1 oder 0,
n = 1 oder 0, insbesondere 1,
$R^6$ und $R^7$ = unabhängig voneinander gleicher oder verschiedener organischer Rest mit 2 bis 24, bevorzugt 5 bis 13 Kohlenstoffatomen, insbesondere gegebenenfalls verzweigter, gegebenenfalls substituierter, insbesondere hydroxy-substituierter, gegebenenfalls ungesättigter, insbesondere gegebenenfalls einfach, zweifach oder dreifach ungesättigter, Alkylrest, bevorzugt solcher ausgewählt aus der Gruppe bestehend aus Pentenyl, Heptenyl, Nonenyl, Undekenyl und Tridekenyl und $(CH2)_x$-CH3 mit x = 1 bis 23, bevorzugt 4 bis 12.

Bevorzugt wird eine Mischungszusammensetzung von Rhamnolipiden eingesetzt, die > 90% diRL enthält.
Bevorzugt wird eine Mischungszusammensetzung von Rhamnolipiden eingesetzt, die

51 Gew.-% bis 95 Gew.-% diRL-C10C10 und
0,5 Gew.-% bis 9 Gew.-% monoRL-C10C10, wobei sich die Gewichtsprozente auf die Summe aller enthaltenen Rhamnolipide beziehen, mit der Maßgabe, dass das Gewichtsverhältnis von di-Rhamnolipiden zu mono-Rhamnolipiden größer 91:9, bevorzugt größer 97:3, besonders bevorzugt größer 98:2 ist, aufweist.

Bevorzugt wird für die erfindungsgemäße Verwendung eine Rhamnolipiden-Mischung enthaltend 0,5 Gew.-% bis 15 Gew.-% diRL-C10C12:1, wobei sich die Gewichtsprozente auf die Summe aller enthaltenen Rhamnolipide beziehen, verwendet.
Vorzugsweise handelt es bei den Sophorolipiden um Verbindungen gemäß der Formel (II) oder (IIa),

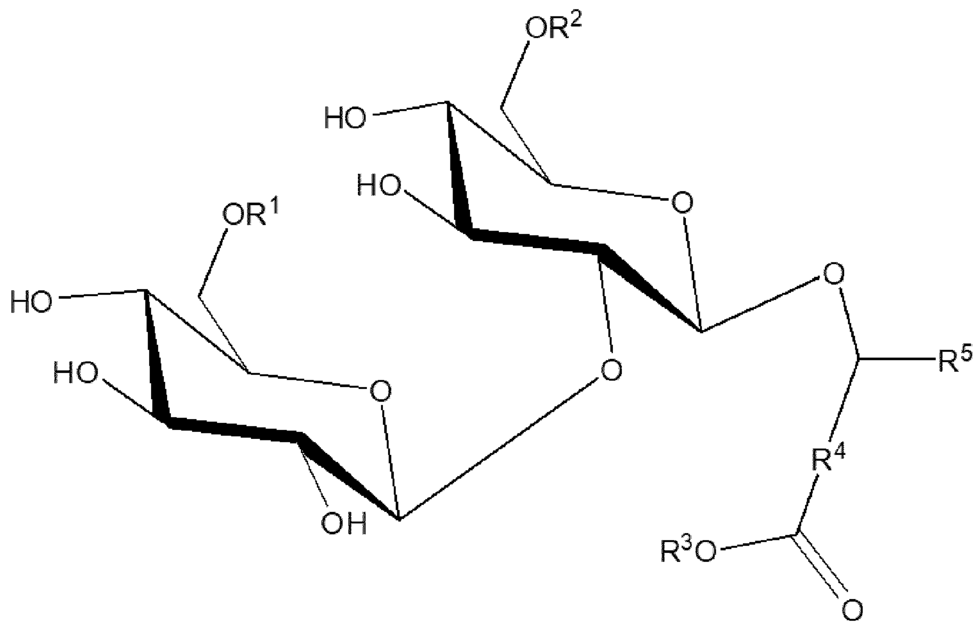

Formel (II)

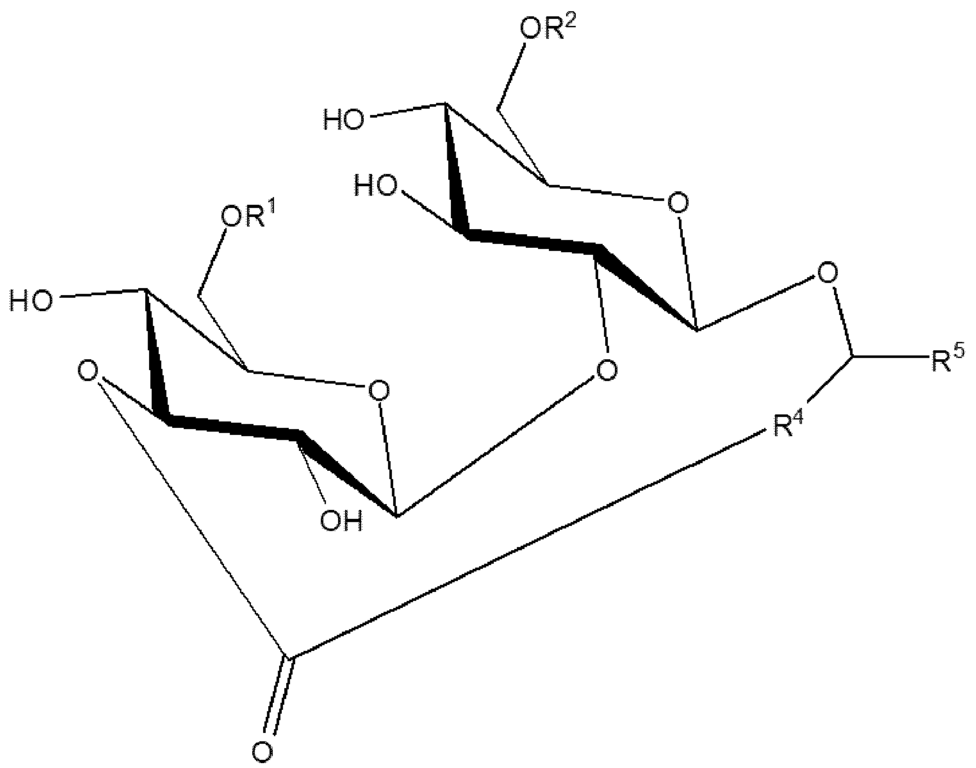

Formel (IIa)

wobei

$R^1$ und $R^2$ unabhängig voneinander entweder H oder eine Acetylgruppe sind,
$R^3$ H, eine Methyl-, Ethyl- oder Hexylgruppe ist,
$R^4$ unabhängig voneinander eine gesättigte oder ungesättigte zweiwertige/zweibindige, verzweigte oder unverzweigte organische Gruppe ist, $R^5$ H oder eine Methylgruppe ist,
mit der Maßgabe, dass die Gesamtzahl der Kohlenstoffatome in den Gruppen $R^4$ und $R^5$ die Zahl 29 nicht überschreitet.

Rhamnolipide sind unter der Bezeichnung Natsurfact bei Fa. Stepan (Northfield, IL, USA) sowie RHEANCE® One bei Evonik Operations GmbH erhältlich.

Sophorolipide sind unter der Bezeichnung HoneySurf bei Fa. Holiferm Limited (Manchester, UK) sowie REWOFERM® SL ONE bei Evonik Operations GmbH erhältlich.

Bevorzugt werden Rhamnolipide und/oder Sophorolipide in einem Bereich von 0,01 Gew.-% bis 10,0 Gew.-% besonders bevorzugt 0,1 Gew.-% bis 5,0 Gew.-%, bezogen auf die Gesamtbeschichtungszusammensetzung eingesetzt.

Bevorzugt werden die Rhamnolipide und Sophorolipide gemäß den allgemeinen Formeln (I), (II) und (IIa) zur Erhöhung der Lagerstabilität von Beschichtungszusammensetzungen verwendet.

Bevorzugt werden die Rhamnolipide und Sophorolipide gemäß den allgemeinen Formeln (I), (II) und (IIa) zur Reduzierung der Verbrauchsmenge von Beschichtungszusammensetzungen verwendet.

Nachstehend soll die Erfindung anhand von Ausführungsbeispielen näher erläutert werden.

## Methoden

### Bestimmung des Rheologieprofils und des Viskositätsverhältnisses

Die Bestimmung des Rheologieprofils der Beschichtungszusammensetzungen erfolgt mit Hilfe eines Rotationsviskosimeters (Euro Physics, Rheo 2000 RC20). Als Messsystem wurde ein Platte/Kegel-System gewählt (45 mm, Winkel 1°; 25 C Messtemperatur).

Dabei wurde folgende Scherraten und Verweilzeiten gewählt:

0,1 bis 10 $s^{-1}$ in 60 s
10 bis 90 $s^{-1}$ in 30 s
100 bis 1.000 $s^{-1}$ in 40 s
1.000 bis 10.000 $s^{-1}$ in 30s

Zur Beurteilung der Abweichung wurden die im Rheologieprofil aufgezeigten Viskositätswerte der Beschichtungszusammensetzungen vor und nach Lagerung bei Scherraten von 1, 100 und 1000 $s^{-1}$ herangezogen. Das Viskositätsverhältnis in % kann wie folgt errechnet werden:

Viskositätsverhältnis in % = (Viskosität, 1 Woche nach Herstellung bei 50°C / Viskosität bei einem Tag nach Herstellung) * 100

Je größer der Zahlenwert des Viskositätsverhältnisses, desto stärker weicht das Rheologieprofil nach Lagerung von dem gewünschten und eingestellten Rheologieprofil ab.

Ergiebigkeit

Die Ergiebigkeit einer Beschichtungszusammensetzungen ist definiert in der "Richtlinie zur Bestimmung des Deckvermögens", VdL-RL 09 des Verbands der deutschen Lackindustrie e. V. Ausgabe Juli 2002.

Ein Substrat mit genormter Oberfläche mit schwarzen und weißen Feldern (Form 2A Fa Leneta) wurde gewogen. Die Farbe wurde auf den Substraten mit Hilfe eines Filmziehgeräts in den Nassschichtstärken 150, 200 und 240 μm aufgetragen. Die frisch beschichteten Substrate wurden wieder gewogen und anschließend bei 23°C und 50% Luftfeuchte für 24 Stunden getrocknet. Danach wurde das Kontrastverhältnis aller Aufzüge mit einem Byk Gardner Spektrophotometer mit sogenannter Glanzfalle gemessen. Dazu wurde an fünf Messpunkten auf jeweils drei schwarzen (Ys Werte) und auf jeweils drei weißen Feldern (Yw Werte) gemessen.

Das Kontrastverhältnis wurde durch Quotientenbildung Ys/Yw * 100 [%] der Durchschnittswerte Yw und Ys ermittelt. Die Ergiebigkeit wurde anschließend in $m^2/L$ bei 99,5% Kontrastverhältnis unter Berücksichtigung der spezifischen Dichte der Farbe und der jeweils aufgetragenen Farbmenge ermittelt.

## Beispiele

### 1. Herstellung einer Beschichtungszusammensetzung

Für die anwendungstechnische Beurteilung wurden Beschichtungszusammensetzungen VB1, B2 und B3 gemäß den Angaben aus Tabelle 1 hergestellt. Das Vergleichsbeispiel VB1 wurde mit dem handelsüblichen Dispergiermittel Tego Dispers 747 W hergestellt.

Zunächst wurden die Positionen 1 bis 5 vorgelegt und mit einem Dispermaten (Dispermat CA der Firma VMA-Getzmann GmbH) 5 Minuten bei 800 U/min homogenisiert, anschließend wurde Position 6 unter Rühren bei 800 U/min zugeben und 2 Minuten gerührt. Positionen 7 bis 11 wurden dann bei 2500 U/min zugegeben und 30 Minuten gerührt. Anschließend wurde die Zubereitung abgekühlt, indem 15 Minuten bei 500 U/min gerührt wurde. Die Positionen 12 bis 14 wurden unter Rühren bei 2500 U/min zugegeben.

**Tabelle 1**

| | | VB1 | B2 B | B3 | | |
|---|---|---|---|---|---|---|
| | **Produkt** | **Menge in g** | **Menge in g** | **Menge in g** | **Hersteller** | **Beschreibung** |
| 1 | Wasser deionisiert | 20,7 | 20,7 | 20,7 | Evonik Operations GmbH | |
| 2 | Calgon N | 0,1 | 0,1 | 0,1 | BK Giulini | Polyphosphat |
| 3 | Additiv 1: Tego Dispers 747 | 0,2 | | | Evonik Operations GmbH | Copolymer |
| | Additiv 2: Rewoferm SL One | | 0,2 | | Evonik Operations GmbH | Sophorolipid |
| | Additiv 3: RHEANCE® One | | | 0,2 | Evonik Operations GmbH | Rhamnolipid |
| 4 | Acticid MBS | 0,2 | 0,2 | 0,2 | Thor GmbH | Biozid |
| 5 | Tylose H 30.000 YP 2 | 0,4 | 0,4 | 0,4 | SE Tylose GmbH & Co. KG | Rheologieadditiv |
| 6 | wässrige Ammoniumhydroxid Lösung (25 %) | 0,1 | 0,1 | 0,1 | AUG. HEDINGER GmbH & Co. KG | Einstellung auf pH-Wert von 6,5 - 9,0 |
| 7 | Tioxide R-TC 90 | 12 | 12 | 12 | Huntsman Corporation | Pigment |
| 8 | Omyacarb Extra CL | 5 | 5 | 5 | Omya GmbH | Füllstoff |
| 9 | Talkum OOC | 5 | 5 | 5 | Imerys Performance Additives | Füllstoff |
| 10 | Omyacarb 2 GU | 10 | 10 | 10 | Omya GmbH | Füllstoff |
| 11 | Omyacarb 10 GU | 14 | 14 | 14 | Omya GmbH | Füllstoff |
| 12 | Tego Foamex 26 | 0,3 | 0,3 | 0,3 | Evonik Operations GmbH | Entschäumer |
| 13 | Mowilith 1871 | 30 | 30 | 30 | Celanese Corporation | Bindemittel |
| 14 | Texanol | 2 | 2 | 2 | Eastman Corporation | Filmbildehilfsmittel |

## 2. Technische Prüfung

Für die anwendungstechnische Prüfung wurden die Beschichtungszusammensetzungen VB1, B2 und B3 aus Beispiel 1 im Hinblick auf das rheologische Verhalten vor und nach Lagerung untersucht und die Ergiebigkeit bestimmt.

### 2.1 Ergiebigkeit

Tabelle 2 zeigt die Ergebnisse der Ergiebigkeit auf.

Es zeigt sich, dass die Beschichtungszusammensetzungen durch die erfindungsgemäße Verwendung von Rewoferm® SL ONE oder RHEANCE® One eine höhere Ergiebigkeit bei einem Kontrastverhältnis bei 99,5 % (Klasse 1) erreichten als mit dem herkömmlichen TEGO® Dispers 747 W.

**Tabelle 2: Ergiebigkeit**

| Beschchtungszusammensetzungen | Ergiebigkeit in ($m^2$/l) bei 99,5 % Kontrastverhältnis |
|---|---|
| VB1 | 3,67 |
| B2 | 5,25 |
| B3 | 4,17 |

## 2.2 Viskositätsverhältnis

Tabelle 3 zeigt die gemessenen Viskositäten der jeweiligen Beschichtungszusammensetzung vor und nach Lagerung sowie deren Viskositätsverhältnisse auf.

Es zeigt sich, dass die Beschichtungszusammensetzungen durch die erfindungsgemäße Verwendung von Rewoferm® SL ONE oder RHEANCE® One ein geringeres Viskositätsverhältnis bei den Scherraten (1/sec, 100/sec, 1000/sec) aufweisen als mit dem herkömmlichen TEGO® Dispers 747 W. Somit kann die Schlussfolgerung getroffen werden, dass die erfindungsgemäßen Beschichtungszusammensetzungen die Applikationseigenschaften bei Lagerung besser beibehalten als die Vergleichsbeispiele.

**Tabelle 3:**

| Beispiele | Scherrate (1/sec) | Viskosität in mPas 1 Tag nach Herstellung | Viskosität in mPas 1 Woche nach Herstellung bei 50°C | Viskositätsverhältnis in % |
|---|---|---|---|---|
| **VB1** | **1** | 75.700 | 207.000 | 274 % |
| | **100** | 2.010 | 5.230 | 260 % |
| | **1000** | 449 | 414 | 92 % |
| **B2** | **1** | 67.000 | 97.000 | 145 % |
| | **100** | 1.990 | 2.570 | 129 % |
| | **1000** | 501 | 466 | 93 % |
| **B3** | **1** | 70.500 | 85.800 | 122 % |
| | **100** | 2.070 | 2.310 | 112 % |
| | **1000** | 484 | 432 | 89 % |

## Patentansprüche

1. Verwendung von Rhamnolipiden und/oder Sophorolipiden zur Erhöhung der Ergiebigkeit und/oder zur Erhaltung der Applikationseigenschaften bei Lagerung von Beschichtungszusammensetzungen.

2. Verwendung nach Anspruch 1, **dadurch gekennzeichnet, dass** es sich bei den Beschichtungszusammensetzungen um Farben und Lacke handelt, ausgewählt aus Innenwandfarben, Fassadenfarben, Bautenfarben, Fussbodenbeschichtungen, Holzlacke, Industrielacke, Autoserien- oder Reparaturlacke, Grundierungen, Füller, Basislacke sowie Decklacke.

3. Verwendung nach einem der vorgenannten Ansprüche, **dadurch gekennzeichnet, dass** die Beschichtungszusammensetzung Feststoffe ausgewählt aus Füllstoffen, Pigmenten, Farbstoffen, optischen Aufhellern, keramischen Materialien, magnetischen Materialien aufweist.

4. Verwendung nach einem der vorgenannten Ansprüche, **dadurch gekennzeichnet, dass** die Beschichtungszusammensetzung weitere Zusatzstoffe enthält, bevorzugt Netzmittel, Dispergieradditive, Rheologieadditive, Verlaufshilfsmittel oder Entschäumer.

5. Verwendung nach einem der vorgenannten Ansprüche, **dadurch gekennzeichnet, dass** es sich bei den Rhamnolipiden um Verbindungen gemäß der allgemeinen Formel (I) oder dessen Salz

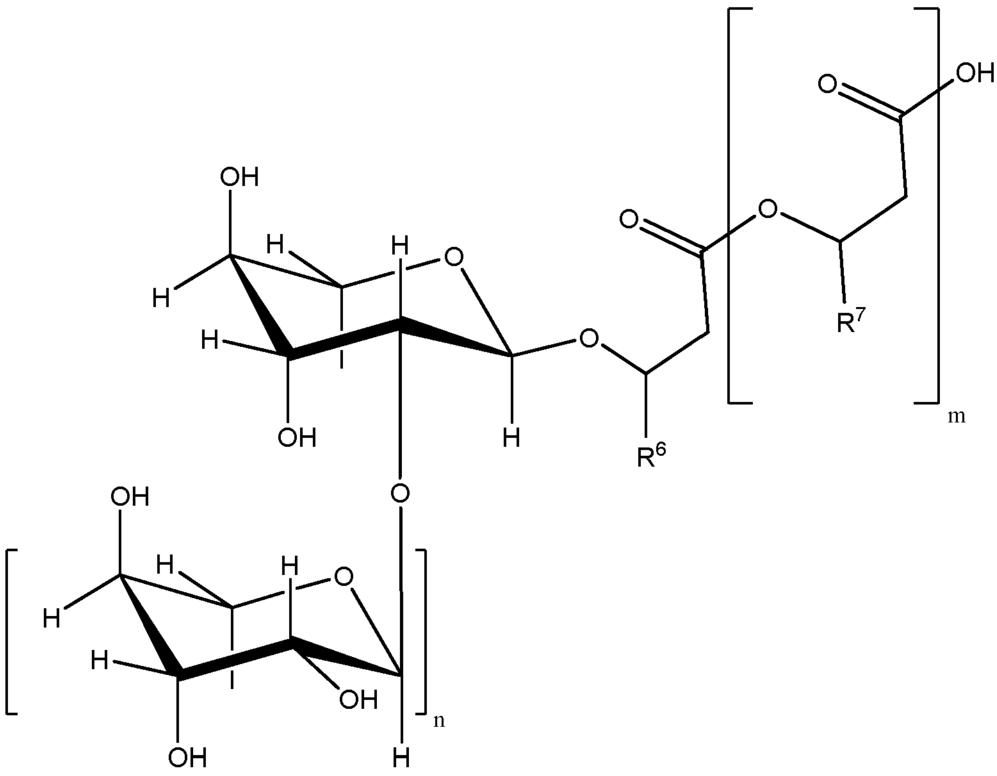

Formel (I)

wobei

m = 2, 1 oder 0, insbesondere 1 oder 0,
n = 1 oder 0, insbesondere 1,
$R^6$ und $R^7$ = unabhängig voneinander gleicher oder verschiedener organischer Rest mit 2 bis 24, bevorzugt 5 bis 13 Kohlenstoffatomen, insbesondere gegebenenfalls verzweigter, gegebenenfalls substituierter, insbesondere hydroxy-substituierter, gegebenenfalls ungesättigter, insbesondere gegebenenfalls einfach, zweifach oder dreifach ungesättigter, Alkylrest, bevorzugt solcher ausgewählt aus der Gruppe bestehend aus Pentenyl, Heptenyl, Nonenyl, Undekenyl und Tridekenyl und $(CH_2)_x$-$CH_3$ mit x = 1 bis 23, bevorzugt 4 bis 12, handelt.

6. Verwendung nach einem der vorgenannten Ansprüche, **dadurch gekennzeichnet, dass** es sich bei den Rhamnolipiden um eine Mischungszusammensetzung mit > 90% diRL handelt.

7. Verwendung nach einem der vorgenannten Ansprüche, **dadurch gekennzeichnet, dass** es sich bei den Rhamnolipiden um Mischungszusammensetzung enthaltend Rhamnolipide handelt, **dadurch gekennzeichnet, dass** die Mischungszusammensetzung

51 Gew.-% bis 95 Gew.-% diRL-C10C10 und
0,5 Gew.-% bis 9 Gew.-% monoRL-C10C10
enthält, wobei sich die Gewichtsprozente auf die Summe aller enthaltenen Rhamnolipide beziehen, mit der Maßgabe, dass das Gewichtsverhältnis von di-Rhamnolipiden zu mono-Rhamnolipiden größer 91:9, bevorzugt größer 97:3, besonders bevorzugt größer 98:2 ist.

8. Verwendung nach einem der vorgenannten Ansprüche, **dadurch gekennzeichnet, dass** es sich bei den Rhamnolipiden um Mischungszusammensetzung enthaltend Rhamnolipide handlet, **dadurch gekennzeichnet, dass** die Mischungszusammensetzung 0,5 Gew.-% bis 15 Gew.-% diRL-C10C12:1 enthält, wobei sich die Gewichtsprozente

auf die Summe aller enthaltenen Rhamnolipide beziehen.

**9.** Verwendung nach einem der vorgenannten Ansprüche, **dadurch gekennzeichnet, dass** es sich bei den Sophorolipiden um Verbindungen gemäß der Formel (II) oder (IIa) handelt,

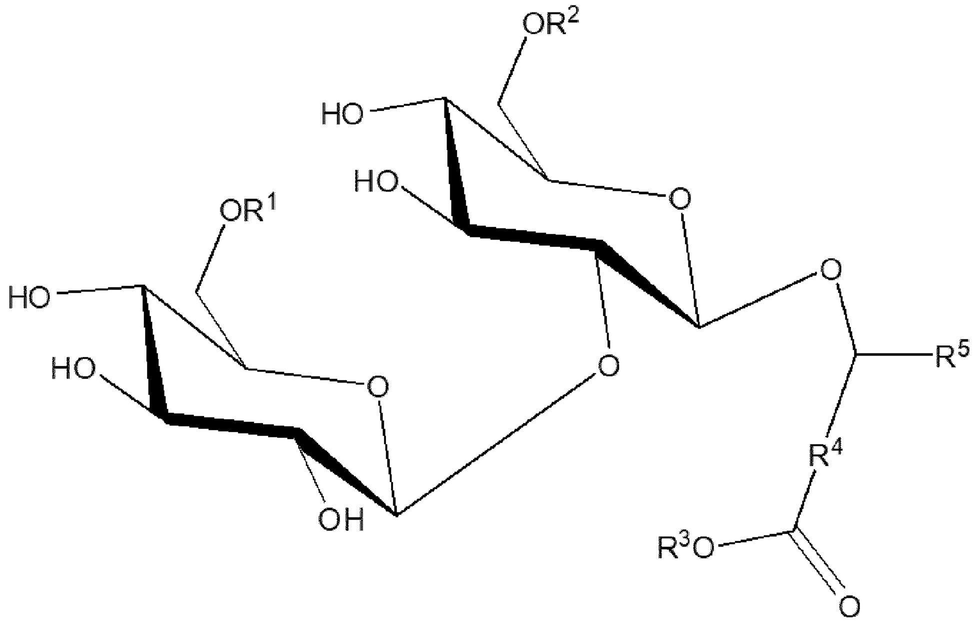

Formel (II)

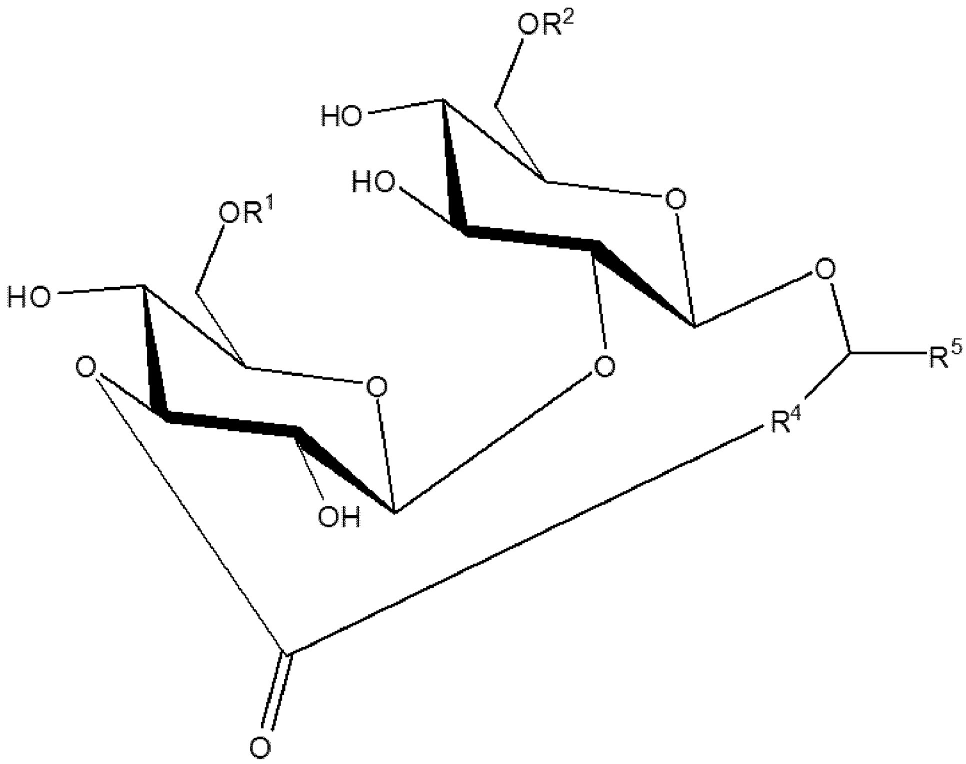

Formel (IIa)

wobei

$R^1$ und $R^2$ unabhängig voneinander entweder H oder eine Acetylgruppe sind,
$R^3$ H, eine Methyl-, Ethyl- oder Hexylgruppe ist,
$R^4$ unabhängig voneinander eine gesättigte oder ungesättigte zweiwertige/zweibindige, verzweigte oder unverzweigte organische Gruppe ist,
$R^5$ H oder eine Methylgruppe ist,
mit der Maßgabe, dass die Gesamtzahl der Kohlenstoffatome in den Gruppen $R^4$ und $R^5$ die Zahl 29 nicht überschreitet.

10. Verwendung nach einem der vorgenannten Ansprüche, **dadurch gekennzeichnet, dass** Rhamnolipide und/oder Sophorolipide in einem Bereich von 0,01 Gew.-% bis 10,0 Gew.-% besonders bevorzugt 0,1 Gew.-% bis 5,0 Gew.-%, bezogen auf die gesamte Beschichtungszusammensetzung eingesetzt werden.

## Claims

1. Use of rhamnolipids and/or sophorolipids for increasing coverage and/or for maintaining application properties in the course of storage of coating compositions.

2. Use according to Claim 1, **characterized in that** the coating compositions are paints and coating materials selected from interior wall paints, exterior paints, architectural paints, floor coatings, wood paints, industrial paints, automotive OEM or refinishing paints, primers, primer-surfacers, basecoats and topcoats.

3. Use according to either of the preceding claims, **characterized in that** the coating composition includes solids selected from fillers, pigments, dyes, optical brighteners, ceramic materials, magnetic materials.

4. Use according to any of the preceding claims, **characterized in that** the coating composition comprises further additives, preferably wetting agents, dispersing additives, rheology additives, levelling aids or defoamers.

5. Use according to any of the preceding claims, **characterized in that** the rhamnolipids are compounds of the general formula (I) or a salt thereof

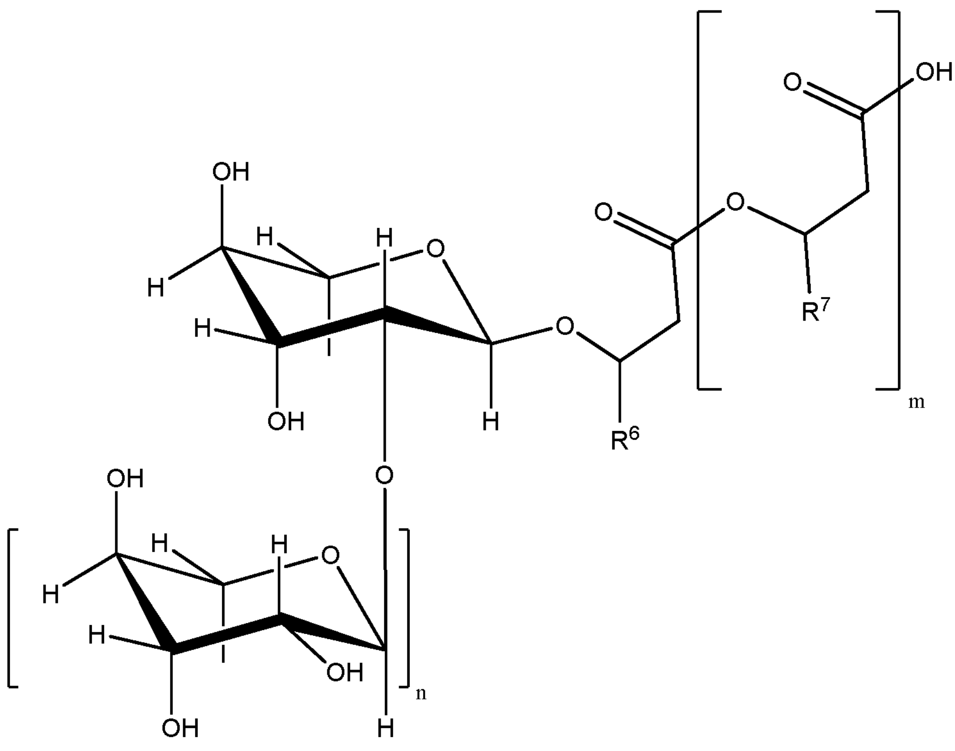

Formula (I)

where

m = 2, 1 or 0, especially 1 or 0,
n = 1 or 0, especially 1,
$R^6$ and $R^7$ = independently an identical or different organic radical having 2 to 24, preferably 5 to 13, carbon atoms, especially optionally branched, optionally substituted, especially hydroxysubstituted, optionally unsaturated, especially optionally mono-, di- or triunsaturated, alkyl radical, preferably those selected from the group consisting of pentenyl, heptenyl, nonenyl, undecenyl and tridecenyl and $(CH_2)_x$-$CH_3$ with x = 1 to 23, preferably 4 to 12.

**6.** Use according to any of the preceding claims, **characterized in that** the rhamnolipids are a mixed composition with > 90% diRL.

**7.** Use according to any of the preceding claims, **characterized in that** the rhamnolipids are a mixed composition comprising rhamnolipids, **characterized in that** the mixed composition contains

51% by weight to 95% by weight of diRL-C10C10 and
0.5% by weight to 9% by weight of monoRL-C10C10,
where the percentages by weight are based on the sum total of all rhamnolipids present, with the proviso that the weight ratio of di-rhamnolipids to monorhamnolipids is greater than 91:9, preferably greater than 97:3, more preferably greater than 98:2.

**8.** Use according to any of the preceding claims, **characterized in that** the rhamnolipids are a mixed composition comprising rhamnolipids, **characterized in that** the mixed composition contains 0.5% by weight to 15% by weight of diRL-C10C12:1, where the percentages by weight are based on the sum total of all rhamnolipids present.

**9.** Use according to any of the preceding claims, **characterized in that** the sophorolipids are compounds of the formula (II) or (IIa)

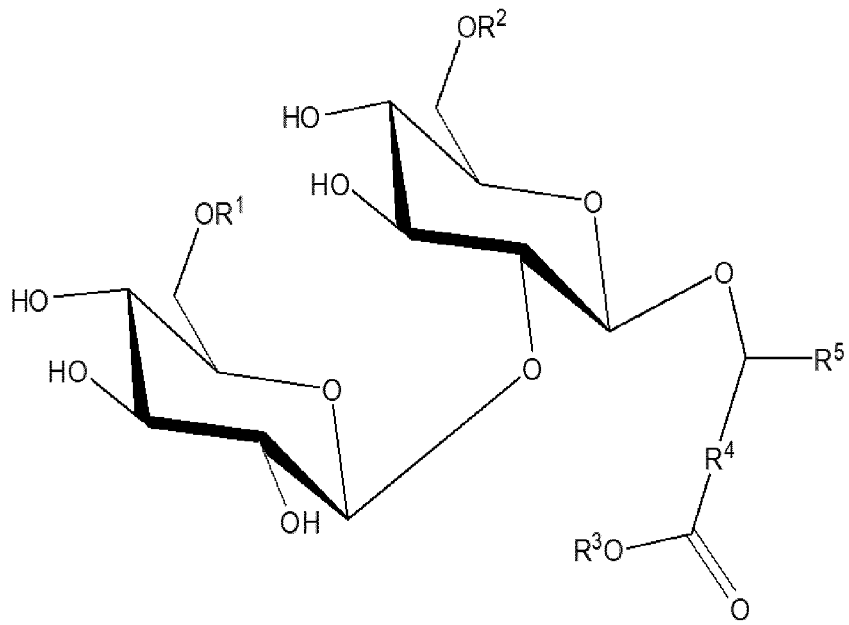

Formula (II)

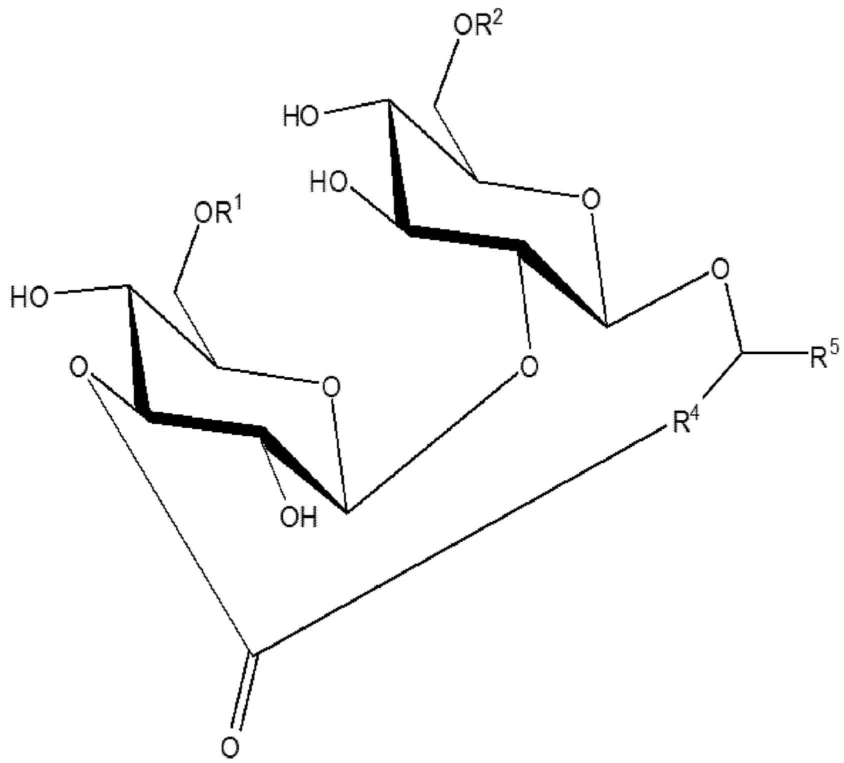

Formula (IIa)

where

$R^1$ and $R^2$ are independently either H or an acetyl group,
$R^3$ is H, a methyl, ethyl or hexyl group,
$R^4$ is independently a saturated or unsaturated divalent branched or unbranched organic group,
$R^5$ is H or a methyl group,
with the proviso that the total number of the carbon atoms in the groups $R^4$ and $R^5$ does not exceed the number 29.

**10.** Use according to any of the preceding claims, **characterized in that** rhamnolipids and/or sophorolipids are used within a range from 0.01% by weight to 10.0% by weight, more preferably 0.1% by weight to 5.0% by weight, based on the overall coating composition.

**Revendications**

**1.** Utilisation de rhamnolipides et/ou de sophorolipides pour l'augmentation du rendement et/ou pour la conservation des propriétés d'application lors du stockage de compositions de revêtement.

**2.** Utilisation selon la revendication 1, **caractérisée en ce que** les compositions de revêtement sont des peintures et des laques, choisies parmi des peintures pour parois intérieures, des peintures pour façades, des peintures pour bâtiments, des revêtements de sol, des laques pour le bois, des laques industrielles, des peintures de série pour automobiles ou de réparation, des apprêts, des agents de remplissage, des laques de base ainsi que des laques de finition.

**3.** Utilisation selon l'une quelconque des revendications précédentes, **caractérisée en ce que** la composition de revêtement présente des solides choisis parmi des charges, des pigments, des colorants, des azurants optiques, des matières céramiques, des matières magnétiques.

**4.** Utilisation selon l'une quelconque des revendications précédentes, **caractérisée en ce que** la composition de revêtement contient d'autres additifs, préférablement des agents mouillants, des additifs de dispersion, des additifs

de rhéologie, des auxiliaires d'étalement ou des antimousses.

5. Utilisation selon l'une quelconque des revendications précédentes, **caractérisée en ce que** les rhamnolipides sont des composés selon la formule générale (I) ou leurs sels

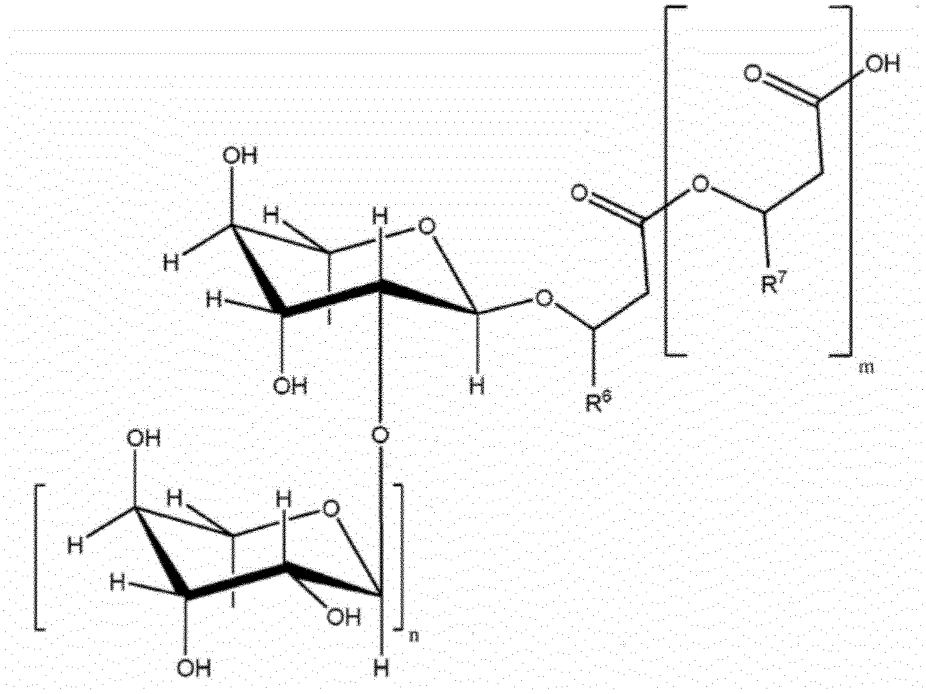

formule (I)

m = 2, 1 ou 0, en particulier 1 ou 0,
n = 1 ou 0, en particulier 1,
$R^6$ et $R^7$ = indépendamment l'un de l'autre, un radical organique identique ou différent comportant 2 à 24, préférablement 5 à 13 atomes de carbone, en particulier un radical alkyle éventuellement ramifié, éventuellement substitué, en particulier substitué par hydroxy, éventuellement insaturé, en particulier éventuellement insaturé une fois, deux fois ou trois fois, préférablement l'un choisi dans le groupe constitué par pentényle, heptényle, nonényle, undécényle et tridécényle et $(CH_2)_x$-$CH_3$ avec x = 1 à 23, préférablement 4 à 12.

6. Utilisation selon l'une quelconque des revendications précédentes, **caractérisée en ce que** les rhamnolipides sont une composition de mélange comportant > 90 % de diRL.

7. Utilisation selon l'une quelconque des revendications précédentes, **caractérisée en ce que** les rhamnolipides sont une composition de mélange contenant des rhamnolipides, **caractérisée en ce que** la composition de mélange contient

51 % en poids à 95 % en poids de diRL-C10C10 et
0,5 % en poids à 9 % en poids de monoRL-C10C10,
les pourcentages en poids se rapportant à la somme de tous les rhamnolipides contenus, à la condition que le rapport en poids de di-rhamnolipides sur mono-rhamnolipides soit supérieur à 91 : 9, préférablement supérieur à 97 : 3, particulièrement préférablement supérieur à 98 : 2.

8. Utilisation selon l'une quelconque des revendications précédentes, **caractérisée en ce que** les rhamnolipides sont une composition de mélange contenant des rhamnolipides, **caractérisée en ce que** la composition de mélange contient 0,5 % en poids à 15 % en poids de diRL-C10C12:1, les pourcentages en poids se rapportant à la somme de tous les rhamnolipides contenus.

9. Utilisation selon l'une quelconque des revendications précédentes, **caractérisée en ce que** les sophorolipides sont des composés selon la formule (II) ou (IIa),

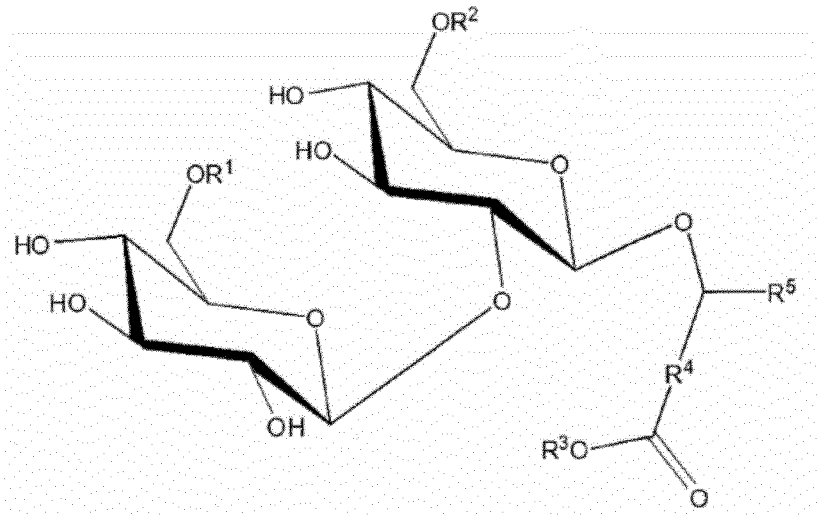

formule (II)

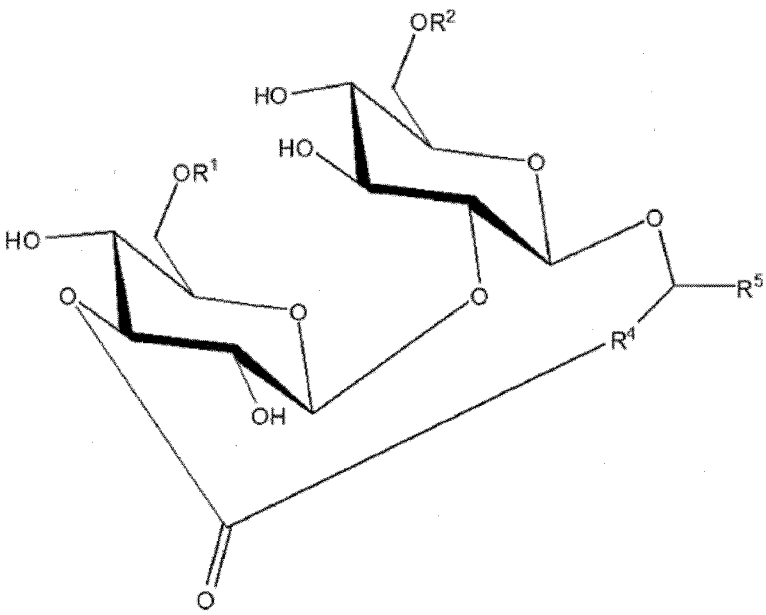

Formule (IIa)

$R^1$ et $R^2$ étant indépendamment l'un de l'autre soit H, soit un groupe acétyle,
$R^3$ étant H, un groupe méthyle, éthyle ou hexyle,
$R^4$ étant indépendamment l'un de l'autre un groupe organique saturé ou insaturé, divalent/à deux liaisons, ramifié ou non ramifié,
$R^5$ étant H ou un groupe méthyle,
à la condition que le nombre total des atomes de carbone dans les groupes $R^4$ et $R^5$ ne dépasse pas le nombre 29.

**10.** Utilisation selon l'une quelconque revendication précédente, **caractérisée en ce que** les rhamnolipides et/ou les sophorolipides sont utilisés dans une plage de 0,01 % en poids à 10,0 % en poids, particulièrement préférablement de 0,1 % en poids à 5,0 % en poids, par rapport à la composition de revêtement totale.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1486524 A1
- EP 1745104 A1
- WO 2016059066 A
- EP 3006505 A
- EP 2847285 A
- WO 2001010447 A
- EP 1889623 A


### In der Beschreibung aufgeführte Nicht-Patentliteratur


- Richtlinie zur Bestimmung des Deckvermögens. Verband der deutschen Lackindustrie e.V, Juli 2002
- Lackformulierung und Lackrezeptur. **BODO MÜLLER ; ULRICH POTH.** Lehrbuch für Ausbildung und Praxis. Vincentz Verlag, 2003
- **P.G. GARRAT.** Strahlenhärtung. Vincent Verlag, 1996
- **W. HERBST ; K.HUNGER.** Industrial Organic Pigments. VCH, Weinheim, 1993
- **HOWE et al.** *FEBS J,* 2006, vol. 273 (22), 5101-12
- **ABDEL-MAWGOUD et al.** *Appl Microbiol Biotechnol,* 2010, vol. 86, 1323-1336
- **MIAO et al.** *Journal of Surfactants and Detergents,* 2014, vol. 17 (6), 1069-1080